Europäisches Patentamt

European Patent Office

Office européen des brevets

(11) Veröffentlichungsnummer: **0 351 429**
**A1**

(12) **EUROPÄISCHE PATENTANMELDUNG**
veröffentlicht nach Art. 158 Abs. 3
EPÜ

(21) Anmeldenummer: 88901157.3

(22) Anmeldetag: 29.09.87

(86) Internationale Anmeldenummer:
PCT/SU87/00107

(97) Internationale Veröffentlichungsnummer:
WO 89/03078 (06.04.89 89/08)

(51) Int. Cl.⁴: **G05D 13/62 , F02D 41/14**

(43) Veröffentlichungstag der Anmeldung:
**24.01.90 Patentblatt 90/04**

(84) Benannte Vertragsstaaten:
**AT CH DE FR GB IT LI SE**

(71) Anmelder: **NAUCHNO-PROIZVODSTVENNOE OBIEDINENIE PO TOPLIVNOI APPARATURE DVIGATELEI**
**Volkovsky pr., 62**
**Leningrad, 192102(SU)**

(72) Erfinder: **KOZLOV, Anatoly Vasilievich**
**12 Krasnoarmeiskaya ul., 21-23**
**Leningrad, 198103(SU)**
Erfinder: **KHAIMIN, Jury Fedorovich**
**Volkovsky pr., 110-106**
**Leningrad, 192102(SU)**
Erfinder: **VAINSHTEIN, Grigory Yakovlevich**
**Volkovsky pr., 110-65**
**Leningrad, 192102(SU)**
Erfinder: **MARAKIN, Vladimir Ivanovich**
**pos. Krasnoobsk, 49-6 Novosibirsky raion**
**Novosibirskaya obl., 633126(SU)**

(74) Vertreter: **Patentanwälte Zellentin & Partner**
**Zweibrückenstrasse 15**
**D-8000 München 2(DE)**

(54) DREHZAHLREGLER FÜR BRENNKRAFTMASCHINE.

(57) Die Erfindung betrifft einen Drehzahlregler einer Wärmemaschine, bei dem der Differentialmechanismus (4) über eine Eingangswelle (3) mit dem Elektromotor (2) einseitiger Drehrichtung, über eine Eingangswelle (5) mit der Wärmemaschine (6) und über eine Ausgangswelle (8) mit dem Kraftstoffdosierorgan (9) der Wärmemaschine (6) kinematisch gekoppelt ist. Im Kanal (10) für die Drehzahlsteuerung des Elektromotors ist ein Drehzahlmesser (11) der Welle (3) an den Eingang (18) einer Einrichtung (19) zur Erzeugung eines Steuersignals angeschlossen, deren Sollsignaleingang (21) an den Ausgang der Einrichtung (22) geschaltet ist. Im Kanal (27) für die Drehzahlkorrektur des Elektromotors je nach der Drehzahl der Wärmemaschine ist ein Drehzahlmesser (28) der Eingangswelle (5) an eine Differenziereinheit (35) angeschlossen, deren Ausgang an den Korrektureingang (25) der Einrichtung (19) gelegt ist.

Im Kanal (36) für die Lagesteuerung des Kraftstoffdosierorgans sind Geber (12, 29) für die Winkellagen
der Wellen (3, 5) an die Eingänge (37, 38) der
Einrichtung zur Bestimmung einer Koordinatenverstimmung zwischen den Winkellagen der Wellen (3,
5) angeschlossen, deren Ausgang mit dem Steuereingang (40) der Einrichtung (22) verbunden ist, an
deren Eingang (41) der Drehzahlmesser (28) geschaltet ist.

FIG.1

# DREHZAHLREGLER EINER WÄRMEMASCHINE

## Gebiet der Technik

Die vorliegende Erfindung betrifft Wärmemaschinen, insbesondere einen Drehzahlregler einer Wärmemaschine.

## Stand der Technik

Den wichtigsten Kennwerten des technischen Niveaus eines Maschinenaggregats mit Wärmemaschine sind die Zuverlässigkeit, die Leistung, die Sparsamkeit im Kraftstoffverbrauch, die Güte von durch das Maschinenaggregat auszuführenden Arbeitsgängen, die Rauchbildung und Toxizität der Abgase in Übergangszuständen, das operative Beschäftigtsein des Fahrers und die Fahrfußhebelkraft des Maschinenaggregats, die Anpassungsfähigkeit der Wärmemaschine an verschiedene Kraftstoffsorten, an Hochgebirgsbedingungen, tiefe Umgebungstemperaturen und andere Kennwerte zuzurechnen. Im bedeutenden Maße hängen die aufgezählten Kennwerte von den statischen und dynamischen Kennlinien des Drehzahlreglers der Wärmemaschine ab.

Bei den bestehenden Wärmemaschinen, insbesondere bei Schlepper- und Kraftfahrzeug-Dieselmotoren werden im wesentlichen mechanische Drehzahlregler mit einem zentrifugalen (in seltenen Fällen pneumatischen oder hydraulischen) Fühler verwendet. Außer der Gewährleistung hoher Kennwerte hinsichtlich der Regelungsgüte der Drehzahl der Wärmemaschine müssen diese Regler eine äußere Fördermenge-Drehzahl-Regelkennlinie und Fördermenge-Drehzahl-Teilregelkennlinien mit solch einer hohen Genauigkeit formieren, daß einerseits die energetischen Möglichkeiten der Wärmemaschine maximal ausgenutzt würden und andererseits die Wirtschaftlichkeit des spezifischen Kraftstoffverbrauchs, die Temperatur, die Rauchbildung und die Toxizität der Abgase und andere Kennwerte die kritischen Werte nicht erreicht werden, bei denen die Kennwerte des technischen Niveaus der Maschinenaggregate verschlechtert werden.

Zur Bildung der äußeren Fördermenge-Drehzahl-Regelkennlinie und der Fördermenge-Drehzahl-Teilregelkennlinien werden an den mechanischen Reglern verschiedenartige Korrekturvorrichtungen und -mechanismen eingebaut. Um den Automatisierungsgrad bei der Steuerung der Wärmemaschine und des Maschinenaggregats im ganzen zu erhöhen, werden diese Regler mit besonderen elektrischen Antriebsvorrichtungen ausgestattet, darunter auch mit einem elektrischen Umkehrmotor zur Einstellung einer Drehzahl der Wärmemaschine, mit Elektromagneten zum Begrenzen und Abstellen der Kraftstoffförderung, einer elektromagnetischen Einrichtung zur Anreicherung des zu fördernden Kraftstoffes beim Start der Wärmemaschine, mit einem elektrohydraulischen Ventil, das zum Überschneiden der Kraftstofförderung im Kraftstoffsystem für die Notstillsetzung der Wärmemaschine bestimmt ist.

Bekannt sind ferner elektrische Drehzahlregler einer Wärmemaschine, welche umfassende Möglichkeiten der Erhöhung des Automatisierungsgrades bei der Steuerung der Wärmemaschine durch eine in diesen Drehzahlreglern angewendete einheitliche elektrisch angetriebene Stelleinrichtung besitzen, durch die die Lage des Kraftstoffdosierorgans der Wärmemaschine verstellt wird.

Die Form des Arbeitsprogramms des Reglers, die zu ihm gehörenden statischen, dynamischen und funktionellen Eigenschaften hängen von dem Verwendungszweck des Maschinenaggregats, den Betriebsbedingungen desselben, der Belastungsart, der Art der auszuführenden Arbeiten und einer Reihe von anderen Faktoren, die mit den einen oder den anderen, durch das Maschinenaggregat auszuführenden technologischen Operationen verbunden sind.

Bekannt ist eine große Gruppe von elektrischen Drehzahlreglern für Wärmemaschinen, die auf der Basis eines elektrischen Stellantriebs zum Positionieren mit alternierender Ankerbewegungsrichtung aufgebaut werden und einen eigentlichen Elektroantrieb, der mit einem

Kraftstoffdosierorgan der Wärmemaschine kinematisch gekoppelt und an eine Einheit zum Vergleich der Istdrehzahl der Wärmemaschine mit der Solldrehzahl elektrisch angeschlossen ist, eine Einrichtung zur Erstellung eines Steuerprogramms der Wärmemaschine, einen Former zur Erzeugung eines Signals, mit dem der Elektroantrieb gesteuert wird, enthalten.

Bei diesen Reglern kann der Elektroantrieb als Momentenmotor oder Proportionalmagnet (Symposiummaterialien der Firma R. Bosch, BRD, herausgegeben am 16.05.84 (Moskau); K. Zimmermanns Bericht "Stand der Technik der Bosch-Dieselapparatur", s. Fig. 17 und 22) oder als Schrittmotor aufgebaut werden (Symposiummaterialien der Firma Friedmann-Maier, Österreich, herausgegeben am 16.04.84 (Leningrad): F. Paschkes Bericht "Entwicklung des elektronischen Reglers", S. 4 bis 5, Fig. 17). Im folgenden soll die ganze aufgezählte Gruppe der elektrischen Positionierantriebe, deren Ankerbewegungsrichtung während der Regelung alterniert, als Elektromotoren bezeichnet werden.

Mit den obengenannten elektrischen Reglern verläuft der Regelungsvorgang der Drehzahl der Wärmemaschine wie folgt. In einem Beharrungszustand, wenn die Drehzahl der Wärmemaschine der Solldrehzahl gleich ist, erscheint am Ausgang der Einheit zum Vergleich dieser Drehzahlen kein Steuersignal. Demzufolge befinden sich der Motoranker und das mit diesem verbundene Kraftstoffdosierorgan im Gleichgewichtszustand, der der Beharrungsbelastung der Wärmemaschine entspricht. Bei einer Abweichung der laufenden Drehzahl der Wärmemaschine von der Solldrehzahl, z.B. bei einer Änderung der Last, erscheint am Ausgang der Vergleichseinheit ein der Differenz der zu vergleichenden Drehzahlen proportionales Signal, das über den Former zur Erzeugung eines für die Steuerung des Elektromotors bestimmten Signals dem Elektromotor zugeführt wird. Dadurch wird das Kraftstoffdosierorgan in eine solche neue Stellung gebracht, bei der die laufende Drehzahl und die Solldrehzahl der Wärmemaschine einander gleich werden.

Die Regler mit elektrischem Positionierantrieb besitzen einen niedrigen Ausnutzungsgrad der Nutzleistung. Das hängt damit zusammen, daß in dem Beharrungszustand der Wärmemaschine, wenn das Kraftstoffdosierorgan und der damit verbundene Anker des Elektromotors stillstehen, der Elektromotor in einer Betriebsart läuft, die dem festgebremsten Zustand seines Ankers nahe ist, der durch einen geringen Wirkungsgrad gekennzeichnet ist. Außerdem bedingen die vorzeichenveränderliche Richtung des magnetischen Ankerflusses des Elektromotors und die damit verbundene Hysterese bei der Ummagnetisierung des Ankers das Vorhandensein einer Zone, in der der letztere gegen den magnetischen Fluß unempfindlich ist, was die Genauigkeit bei der Steuerung der Lage des Kraftstoffdosierorgans herabsetzt, weshalb die Kennwerte der dynamischen Kennlinien zur Regelung der Drehzahl der Wärmemaschine (z.B. Unstabilität der Drehzahl der Wärmemaschine, Überregeln und Übergangszeit) sowie die statischen Kennlinien, d.h. die äußere Fördermenge-Drehzahl-Regelkennlinie und die Fördermenge-Drehzahl-Teilregelkennlinien der Wärmemaschine, verschlechtert werden.

Da die Wirkungsweise der zu behandelnden Regler auf dem proportionalen Regelungsgesetz beruht, werden eine äußere Fördermenge-Drehzahlregelkennlinie und Fördermenge-Drehzahl-Teilregelkennlinien mit einer bestimmten Steilheit erzeugt, bei der eine stabile Betriebsweise der Wärmemaschine im gesamten Bereich der Drehzahlen und Belastungen gesichert wird. Bei Änderung der Belastung der Wärmemaschine ändert sich entsprechenderweise auch die Drehzahl derselben. Aufgrund der gemessenen Größe der Drehzahlabweichung vom vorhergehenden Drehzahlwert wird beim Übergang von einem Belastungszustand der Wärmemaschine zu einem anderen die Größe der an die Wärmemaschine angelegten Last ausgewertet. Durch Zuführung des gemessenen Signals an die Einrichtung zur Erstellung des Steuerprogramms der Wärmemaschine können die äußere Fördermenge-Drehzahl-Regelkennlinie und die Fördermenge-Drehzahl-Teilregelkennlinien erzeugt werden. Da es im Elektromotor eine Zone gibt, in der er gegen den Magnetfluß unempfindlich ist, erweist sich dabei die Genauigkeit bei der Bildung der genannten Kennlinien als gering.

Um die Genauigkeit der Bildung von statischen und dynamischen Kennlinien zu erhöhen, werden derartige Regler mit einem Kanal für die Lagesteuerung des Kraftstoffdosierorgans versehen. In diesem Kanal erfolgt die Messung der Lage des Kraftstoffdosierorgans mit Hilfe eines induktiven Lagegebers (im allgemeinen können auch kapazitive, fotoelektrische und andere Lagegeber angewendet werden), welcher unmittelbar mit dem Kraftstoffdosierorgan verbunden und über einen Wandler an die Einrichtung zur Erstellung des Steuerprogramms der Wärmemaschine angeschlossen ist. Somit wird die Erzeugung des Steuersignals nach einem linearen Parameter vorgenommen, bei dessen Messung mit Hilfe der Geber des genannten Typs sich eine geringe Meßgenauigkeit infolge eines beträchtlichen Meßfehlers ergibt. Als Folge davon bietet sogar das Vorhandensein des Kanals für die Lagesteuerung des Kraftstoffdosierorgans keine Möglichkeit, eine äußere Drehzahl-Regelkennlinie und Drehzahl-Teilregelkennlinien mit gewünschter Genauigkeit zu bilden.

Bekannt ist auch ein Drehzahlregler einer Wärmemaschine (SU,A,708065), der einen Differentialmechanismus, dessen erste Eingangswelle mit einem Elektromotor einseitiger Drehrichtung kinematisch verbunden ist, dessen zweite Eingangswelle durch die Wärmemaschine angetrieben wird und dessen Ausgangswelle mit dem Kraftstoffdosierorgan der Wärmemaschine kinematisch gekoppelt ist, einen Kanal für die Drehzahlsteuerung des Elektromotors, in welchem Kanal der Drehzahlmesser der ersten Eingangswelle des Differentialmechanismus an den Eingang der Einrichtung zur Erzeugung eines Steuersignals angeschlossen ist, dessen Ausgang an den Elektromotor geschaltet ist und dessen Sollwertvorgabeeingang mit dem Ausgang einer Einrichtung zur Erzeugung des Drehzahlsteuerprogramms des Elektromotors in Verbindung steht, die einen Sollwertvorgabeeingang aufweist, und einen Kanal für die Korrektur der Drehzahl des Elektromotors je nach der Drehzahl der Wärmemaschine enthält, wobei im Korrekturkanal der Drehzahlmesser der zweiten Eingangswelle des Differentialmechanismus ausgangsseitig an den Eingang einer Differentiereinheit geschaltet ist, deren Ausgang an den Korrektureingang der Einrichtung zur Erzeugung des Steuersignals für den Drehzahlsteuerkanal des Elektromotors angeschlossen ist.

Bei dem in Rede stehenden Regler werden die Eingangswellen des Differentialmechanismus durch die Wärmemaschine und den Elektromotor gegensinnig angetrieben. Bei Gleichheit der Drehzahlen der Wellen bleiben die Ausgangswelle des Differentialmechanismus und das damit verbundene Kraftstoffdosierorgan unbeweglich. Mit einer Laständerung der Wärmemaschine oder bei Änderung der vorgegebenen Drehzahl einer der Eingangswellen dreht sich die Ausgangswelle und verschiebt das Kraftstoffdosierorgan in eine Stellung, die dem neuen Last- oder Drehzahlbetrieb der Wärmemaschine entspricht, und in der die Drehzahlen der Eingangswellen einander gleich werden. Durch Vorhandensein des Differentialmechanismus in dem zu betrachtenden Regler wird es möglich, einen Elektromotor anzuwenden, bei dem die Drehrichtung nicht alternierend sondern einseitig ist. Die Rolle der Hauptrückführung spielt im Regler ein mechanisches Getriebe von der Welle der Wärmemaschine zur Eingangswelle des Differentialmechanismus. Der beschriebene Regler zeigt neben der hohen Zuverlässigkeit, der geringen Energieaufnahme des elektrischen Antriebs und der einfachen Bauart noch hohe dynamische Regelgüteparameter der Drehzahl der Wärmemaschine. Dies ist dadurch bedingt, daß die Drehzahl der Wärmemaschine mit beschriebenem Regler und die Genauigkeit der Aufrechterhaltung der Drehzahl durch die Solldrehzahl des Elektromotors und durch die Genauigkeit der Stabilisierung der letzteren im Drehzahlsteuerkanal des Elektromotors bestimmt wird. Um die Regelgüteparameter der Wärmemaschine in Übergangszuständen zu verbessern, ist der Drehzahlmesser der zweiten Eingangswelle des Differentialmechanismus an den Korrektureingang der Steuersignalerzeugungseinheit über eine Differenziereinheit angeschlossen.

Der behandelte Reglertyp beruht auf dem integralen Regelungsgesetz, so daß er Vorteile gegenüber den früher beschriebenen Reglern besitzt. Da in diesem Regler ein Elektromotor einseitiger Drehrichtung angewendet ist, tritt bei einseitig gerichteter Wirkung des Magnetflusses im Anker keine Hysterese auf. Dadurch wird im Regler die Unempfindlichkeitszone für den Magnetfluß vermieden, die in den früher beschriebenen Reglern beobachtet wird. Daher haben die dynamischen Kennlinien des zuletzt behandelten Reglers bessere Regelgüteparameter für die Drehzahl der Wärmemaschine. Dieser Reglertyp besitzt gegenüber den obenbeschriebenen bessere statische Kennlinien, weil die äußere Fördermenge-Drehzahl-Regelkennlinie und die Fördermenge-Drehzahl-Teilregelkennlinien, welche von diesem Regler formiert werden, die Nullsteilheit aufweisen, die besonders zum Einsatz der Wärmemaschine als Bestandteil solcher Maschinenaggregate erforderlich ist, wie sie dieselelektrische Aggregate, landwirtschaftliche Traktoren, Vollerntemaschinen und Transportmaschinen sind.

Mit Hilfe dieses Reglers wird zwar die Nullsteilheit der Fördermenge-Drehzahlregelkennlinien der Wärmemaschine gesichert, jedoch bietet sich dabei keine Möglichkeit, eine Information über die Belastung der Wärmemaschine, die sich auf die Drehzahlabweichung der letzteren bezieht, zu gewinnen, so daß es unmöglich wird, die äußere Regelkennlinie und die Teilregelkennlinien nach einem Gesetz zu formieren, das von der Belastung der Wärmemaschine abhängt.

Der Erfindung liegt die Aufgabe zugrunde, einen Drehzahlreglereiner Wärmemaschine zu schaffen, bei dem die Erzeugung eines Signals für die Lagesteuerung des Kraftstoffdosierorgans nach einem solchen Parameter vorgenommen wird, der die Formierung einer äußeren Fördermenge-Drehzahl-Regelkennlinie und von Fördermenge-Drehzahl-Teilregellinien der Wärmemaschine nach einem Gesetz gewährleistet, das von der Belastung der Wärmemaschine abhängt.

Die gestellte Aufgabe wird dadurch gelöst, daß der Drehzahlregler einer Wärmemaschine, der einen Differentialmechanismus, dessen erste Eingangswelle mit einem Elektromotor einseitiger Drehrichtung kinematisch gekoppelt ist und dessen zweite Eingangswelle durch die Wärmemaschine angetrieben wird, wobei die Ausgangswelle mit dem Kraftstoffdosierorgan der Wärmemaschine kinematisch gekoppelt ist, einen Drehzahlsteuerkanal des Elektromotors, bei dem der Drehzahlmesser der ersten Eingangswelle des Differentialmechanismus ausgangsseitig an den Eingang einer Einrichtung zur Erzeugung eines Steuersignals angeschlossen ist, deren Ausgang an den Elektromotor geschaltet ist und deren Sollwerteingang am Ausgang einer Einrichtung zur Erstellung des Drehzahlsteuerprogramms liegt, die einen Eingang für die Eingabe eines Sollwertsignals aufweist, und einen Kanal zur Drehzahlkorrektur des Elektromotors je nach der Drehzahl der Wärmemaschine enthält, in welchem der Drehzahlmesser der zweiten Eingangswelle des Differentialmechanismus ausgangsseitig an den Eingang einer Differentiereinheit angeschlossen ist, deren Ausgang am Korrektureingang der Einrichtung zur Erzeugung eines Steuersignals für den Drehzahlsteuerkanal des Elektromotors liegt, gemäß der Erfindung mit einem Kanal für die Lagesteuerung des Kraftstoffdosierorgans der Wärmema-

schine versehen ist, welcher über Geber für die Winkellagen der ersten und der zweiten Eingangswelle des Differentialmechanismus und über eine eingangsseitig an die Ausgänge dieser Geber angeschlossene Einrichtung zur Bestimmung einer Koordinatenverstimmung _abweichung_ zwischen den Winkellagen der ersten und zweiten Eingangswelle des Differentialmechanismus verfügt, deren Ausgang an den Steuereingang der Einrichtung zur Erstellung des Drehzahlsteuerprogramms des Elektromotors gelegt ist, wobei der Ausgang des Drehzahlmessers der zweiten Eingangswelle des Differentialmechanismus mit dem Informationseingang der Einrichtung zur Erstellung des Drehzahlsteuerprogramms des Elektromotors in Verbindung steht.

Es ist vorteilhaft, daß die Einrichtung zur Bestimmung einer Koordinatenverstimmung zwischen den Winkellagen der ersten und zweiten Eingangswelle des Differentialmechanismus eine Einheit zur Bestimmung einer zeitlichen Koordinatenverschiebung der Winkellagen der ersten und zweiten Eingangswelle des Differentialmechanismus und einen Rechner enthält, dessen einer Eingang am Ausgang der Einheit zur Bestimmung einer zeitlichen Koordinatenverschiebung zwischen den Winkellagen der ersten und zweiten Eingangswelle des Differentialmechanismus liegt und dessen andere Eingänge mit den Ausgängen der Drehzahlmesser der ersten und der zweiten Eingangswelle des Differentialmechanismus verbunden sind.

Es ist von Vorteil, daß der Rechner des Drehzahlreglers einen Multiplizierer und einen Summator enthält, dessen Ausgang an einen der Eingänge des Multiplizierers angeschlossen ist.

Es ist zweckdienlich, daß im Drehzahlregler - bei der Ausführung der Geber für die Winkellagen der ersten und der zweiten Eingangswelle des Differentialmechanismus in Form von Impulsgebern für die Winkellage- die Einheit zur Bestimmung einer zeitlichen Koordinatenverschiebung der Winkellagen der ersten und zweiten Eingangswelle des Differentialmechanismus ein Flipflop und einen mit diesem in Reihe geschalteten Taktimpulszähler enthält.

Der Drehzahlregler der Wärmemaschine erzeugt ein Steuersignal, durch das die Lage des Kraftstoffdosierorgans nach der Koordinatenverstimmung zwischen den Winkellagen der Eingangswellen des Differentialmechanismus gesteuert wird. Kinematische Eigenschaften des Differentialmechanismus sind solche, daß bei Änderung der Koordinaten der Winkellagen der Eingangswellen des letzteren sich proportional dazu die Koordinate der Ausgangswelle des Differentialmechanismus ändert. Da die Ausgangswelle mit der Lage des Kraftstoffdosierorgans kinematisch gekoppelt ist, nimmt das letztere eine zugehörige Lage ein. Bei der Regelung der Drehzahl der Wärmemaschine nimmt das Kraftstoffdosierorgan eine Lage ein, die der Belastung der Wärmemaschine entspricht. Daher kann durch Messung einer Koordinatenverstimmung zwischen den Winkellagen der Eingangswellen von deren Ausgangskoordinatenwerten eine Information über die Belastung der Wärmemaschine gewonnen werden.

Durch Eingabe einer Information über die Belastung der Wärmemaschine in die Einrichtung zur Erstellung des Drehzahlsteuerprogramms des Elektromotors wird es beim Vorhandensein einer der Drehzahl der Wärmemaschine zugeordneten Information in dieser Einrichtung möglich, eine äußere Drehzahlregelkennlinie und Drehzahl-Teilregelkennlinien nach einem beliebigen Gesetz zu formieren, d.h. praktisch mit beliebiger Steilheit, was den Regler universal macht.

Während der Regelung der Drehzahl der Wärmemaschine wird die Verstimmungsgröße der Koordinaten der Winkellagen der Eingangswellen des Differentialmechanismus ständig geändert. Daher wird, um eine ununterbrochene Erzeugung des Steuersignals für die Lage des Kraftstoffdosierorgans zu sichern, die Messung der Koordinatenverstimmung bei jeder Umdrehung der Eingangswelle des Differentialmechanismus vorgenommen. Innerhalb dieses Zyklus werden durch den Rechner, der als Bestandteil der Einrichtung zur Bestimmung einer Koordinatenverstimmung zwischen den Winkellagen der Eingangswellen des Differentialmechanismus dient, die Drehzahlen der Eingangswellen des Differentialmechanismus in Digitalform addiert und das so erhaltene Ergebnis mit der zeitlichen Koordinatenverschiebung zwischen den Winkellagen der Eingangswellen multipliziert. Infolgedessen, daß die Messung innerhalb jeder Umdrehung der Eingangswelle vorgenommen wird, d.h. daß eine hohe Diskretheit der Messung gesichert wird, ergibt sich eine bessere Genauigkeit der Erzeugung der äußeren Drehzahlregelkennlinie und der Drehzahl-Teilregelkennlinien.

Die höchste Annäherung der erwähnten Regelkennlinien an die Kennlinien, die in der zum Regler gehörenden Einrichtung zur Erstellung des Drehzahlsteuerprogramms des Elektromotors vorgegeben sind, wird durch die hohe Genauigkeit der Messung der Koordinaten der Winkellagen der Eingangswellen gesichert, weil darin Lage-Impulsgeber angewendet sind, die bei der Steuerung des zur Einheit zur zeitlichen Koordinatenverschiebung gehörenden Flipflops den Taktimpulszähler ein- und abschaltet, wodurch ein Fehler, der bei der Messung der zeitlichen Verschiebung der Koordinaten auftritt, nur Bruchteile eines Prozentes beträgt. Diese Genauigkeit bietet samt einer Stabilität des zu erzeugenden Signals, die von der Vibrationshöhe, der Temperatur, der Feuchtigkeit, elektromagnetischen Störungen und anderen Faktoren nicht abhängt, die Möglichkeit, unter Verwendung der Erfindung die äußere Fördermenge-Drehzahl-Regelkennlinie und die Fördermenge-Drehzahl-Teilregelkennlinien mit hoher Genauigkeit zu formieren. Dadurch werden bessere Kennwerte des Maschinenaggregats, darunter auch erhöhte dynamische Regelgüteparameter der Drehzahl der Wärmemaschine, sowie verbesserte Kennwerte hinsichtlich der Sparsamkeit im Kraftstoffverbrauch, der Rauchbildung und der Toxizität der Abgase der Wärmemaschine erzielt.

Kurze Beschreibung der Zeichnungen

Nachstehend wird die Erfindung an Hand einer konkreten Ausführungsform unter Bezugnahme auf Zeichnungen näher erläutert. Es zeigt:

Fig. 1 ein Funktionsschaltbild eines erfindungsgemäßen Drehzahlreglers einer Wärmemaschine;

Fig. 2 Zeitdiagramme von Impulsen an den Ausgängen der Geber für die Winkellagen der Eingangswellen des Differentialmechanismus, der Taktimpulszähler, die zu den Drehzahlmessern der Eingangswellen des Differentialmechanismus gehören, und der Einheit zur Bestimmung einer zeitlichen Koordinatenverschiebung der Winkellagen der Eingangswellen des Differentialmechanismus;

Fig. 3 Abhängigkeiten für die Koordinatenverstimmung der Winkellagen der Eingangswellen des Differentialmechanismus und für die Kraftstofffördermenge von der Drehzahl der Wärmemaschine, welche einer äußeren Fördermenge-Drehzahl-Regelkennlinie und Fördermenge-Drehzahl-Teilkennlinien entsprechen.

Bevorzugte Ausführungsform der Erfindung

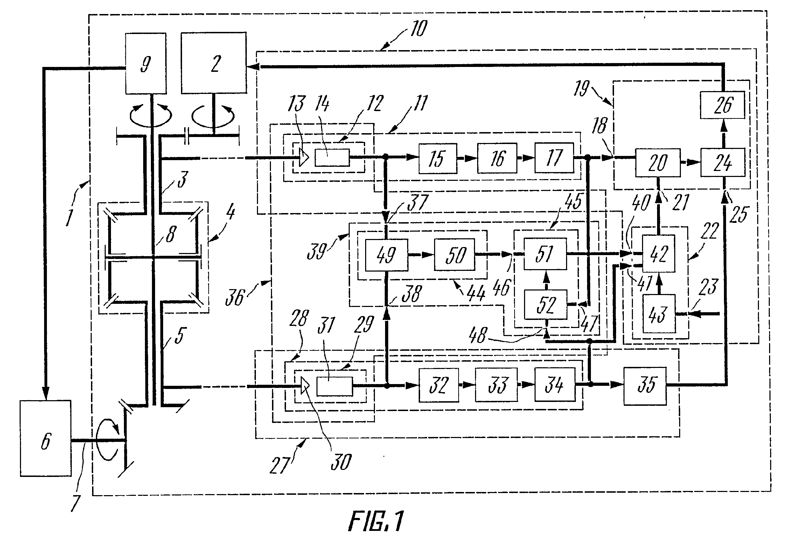

Der Drehzahlregler 1 (Fig. 1) einer Wärmemaschine enthält einen Elektromotor 2 mit einseitiger Drehrichtung, der mit einer ersten Eingangswelle 3 eines Differentialmechanismus 4 kinematisch gekoppelt ist. Eine andere Eingangswelle 5 des Differentialmechanismus 4 wird von der Wärmemaschine 6 angetrieben, wobei diese Welle 5 bei der in Rede stehenden Ausführungsform mit deren Welle 7 kinematisch gekoppelt ist. Die Ausgangswelle 8 des Differentialmechanismus 4 ist mit einem Kraftstoffdosierorgan 9 der Wärmemaschine 6 kinematisch verbunden. In der Zeichnung sind die kinematischen Kopplungen des Differentialmechanismus 4 als Zahngetriebe dargestellt.

Der Regler 1 enthält auch einen Drehzahlsteuerkanal 10 des Elektromotors. Am Eingang des Steuerkanals 10 ist ein Drehzahlmesser 11 der ersten Eingangswelle des Differentialmechanismus eingebaut, bei welchem ein Geber 12 für die Winkellage der ersten Eingangswelle aus einem Erregungselement 13 und einem Generator 14 besteht, der ein Impulssignal bei der Wechselwirkung mit dem Erregungselement 13 liefert. Der Generator 14 ist an den Eingang eines Flipflops 15 mit Zählansteuerung angeschlossen, das seinerseits an den Eingang eines Taktimpulszählers 16 geschaltet ist. Der Ausgang des Taktimpulszählers 16 liegt am Eingang eines Wandlers 17 zur Umwandlung von Taktimpulsen in eine Winkelgeschwindigkeit der ersten Eingangswelle 3 des Differentialmechanismus. Der Ausgang des Wandlers 17 ist mit dem Eingang 18 einer Einrichtung 19 zur Erzeugung eines Steuersignals verbunden. Als Eingang 18 dient ein Eingang einer Vergleichseinheit 20, in der der Vergleich der Drehzahl des Elektromotors mit der Solldrehzahl erfolgt. Ein anderer Eingang der Vergleichseinheit 20 dient als Sollwerteingang 21 der Einrichtung 19 zur Erzeugung eines Steuersignals, über welchen das Sollwertsignal der Drehzahl des Elektromotors 2 eingegeben wird. Am Eingang 21 liegt der Ausgang einer Einrichtung 22 zur Erstellung des Drehzahlsteuerprogramms des Elektromotors, die einen Eingang 23 aufweist, über den ein Sollwertsignal eingegeben wird. Der Ausgang der Vergleichseinheit 20 ist an einen der Eingänge eines Summators 24 geschaltet, dessen anderer Eingang als Korrektureingang 25 der Einrichtung 19 zur Erzeugung eines Steuersignals dient. Der Summator 24 ist an den Eingang eines Umsetzer 26 angeschlossen, dessen Ausgang, der als Ausgang der Einrichtung 19 und des Steuerkanals 10 zugleich dient, mit dem Elektromotor 2 verbunden ist. Als Umsetzer 26 kann ein beliebiger Wandler benutzt sein, der die Steuerschaltung des Reglers an den Elektromotor 2 anpaßt und z.B. einen Umsetzer zur Umsetzung eines Digitalsignals in Synchronisierimpulse darstellen kann, durch welche eine Schaltfolge der Wicklungen des Elektromotors 2 eingestellt wird.

Der Regler 1 enthält einen Kanal 27 für die Drehzahlkorrektur des Elektromotors 2 je nach der Drehzahl der Wärmemaschine, an dessen Eingang ein Drehzahlmesser 28 der zweiten Eingangswelle des Differentialmechanismus angeordnet ist. Ein zum Drehzahlmesser 28 gehörender Geber 29 für die Winkellage der zweiten Eingangswelle 5 besteht aus einem an der Welle 5 angebrachten Erregungselement 30 und einem Generator 31, der ein Impulssignal bei der Wechselwirkung mit dem Erregungselement 30 erzeugt. Der Generator 31 ist an den Eingang eines Flipflops 32 mit Zählansteuerung geschaltet, das seinerseits an den Eingang eines Taktimpulszählers 33 gelegt ist. Der Ausgang des Taktimpulszählers 33 ist an den Eingang eines Wandlers 34 zur Umwandlung von Taktimpulsen in eine Winkelgeschwindigkeit der zweiten Eingangswelle 5 des Differentialmechanismus 4 angeschlossen. Der Ausgang des Wandlers 34 ist an den Eingang einer Differenziereinheit 35 angeschlossen, deren Ausgang, der zugleich als Ausgang des Kanals 27 für die Drehzahlkorrektur dient, mit dem Korrektureingang 25 der Einrichtung 19 zur Erzeugung eines Steuersignals verbunden ist.

Es ist dabei zweckmäßig, als Geber 12, 29 für die Winkellagen der Eingangswellen des Differentialmechanismus magnetelektrische und optische Impuls-Winkellagegeber einzusetzen, in denen die Erregungselemente in Form von z.B. Magneten, Scheiben mit Schlitzen oder Vorsprüngen ausgeführt sind, welche an den Eingangswellen 3,5 des Differentialmechanismus 4 angebracht sind.

Der Regler 1 enthält auch einen Kanal 36 für die Lagesteuerung des Kraftstoffdosierorgans 9 der Wärmemaschine 6, wobei am Eingang dieses Kanals Geber für die Winkellagen der ersten und zweiten Eingangswelle 3 bzw. 5 des Differentialmechanismus 4 angeordnet sind. In der zu behandelnden Ausführungsform des Reglers 1 sind als Geber für die Winkellagen die Geber 12, 29 benutzt. Die Ausgänge der Geber 12, 29 sind an den ersten Eingang 37 bzw. den zweiten Eingang 38 einer Einrichtung 39 zur Bestimmung einer Koordinatenverstimmung zwischen den Winkellagen der ersten und der zweiten Eingangswelle des Differentialmechanismus angeschlossen, deren Ausgang, der zugleich als Ausgang des Steuerkanals 36 dient, an den Steuereingang 40 der Einrichtung 22 zur Erstellung des Drehzahlsteuerprogramms geschaltet ist, wobei mit dem Informationseingang 41 der Einrichtung 22 der Ausgang des Drehzahlmessers 28 verbunden ist.

In der zu behandelnden Ausführungsform des Drehzahlreglers dient als Steuereingang 40 der erste Eingang einer Vergleichseinheit 42 und als Informationseinheit 41 der zweite Eingang der Vergleichseinheit 42, an deren dritten Eingang eine Speichereinheit 43 angeschlossen ist, in der ein Satz von Programmen zur Erzeugung einer äußeren Fördermenge-Drehzahl-Regelkennlinie und von Fördermenge-Drehzahl-Teilregelkennlinien abgespeichert ist, wobei jeder dieser Kennlinien ein Sollwertsignal zugeordnet ist, das über den Eingang 23 der Einrichtung 22 zur Erstellung des Drehzahlsteuerprogramms eingestellt wird.

Die Einrichtung 39 zur Bestimmung einer Koordinatenverstimmung enthält eine Einheit 44 zur Bestimmung einer zeitlichen Koordinatenverschiebung zwischen den Winkellagen der ersten und zweiten Eingangswelle des Differentialmechanismus und einen Rechner 45, dessen Eingang 46 an den Ausgang der Einheit 44 angeschlossen ist und dessen Eingänge 47, 48 mit dem Ausgang des Drehzahlmessers 11 bzw. 28 der ersten und zweiten Eingangswelle des Differentialmechanismus in Verbindung stehen.

Bei der Ausführung der Geber für die Winkellagen der ersten und zweiten Eingangswelle 3 bzw. 5 des Differentialmechanismus 4 in Form von Impuls-Winkellagegebern enthält die Einheit 44 zur Bestimmung einer zeitlichen Koordinatenverschiebung ein Flipflop 49 und einen mit diesem in Reihe geschalteten Taktimpulszähler 50.

Die Eingabe in die Taktimpulszähler 16, 33 und 50 des in Fig. 1 gezeigten Funktionsschaltbildes des Reglers 1 erfolgt gleichzeitig von einem gemeinsamen Taktimpulsgenerator oder von eigenen Taktgeneratoren (nicht gezeigt).

Die Stromversorgung des Elektromotors 2 und der zu den Kanälen 10, 27 und 36 gehörenden Elemente erfolgt auf übliche Weise durch deren Anschluß an die Bordstromversorgungsquelle der Wärmemaschine 6 oder an eine autonome Stromversorgungsquelle (nicht gezeigt).

Bei dem behandelten Schaltbild des Reglers 1 treffen an dem Rechner 45 Informationen über Drehzahlen der Wellen 3,5 des Differentialmechanismus 4 und über eine zeitliche Koordinatenverschiebung zwischen den Winkellagen der Wellen 3,5 ein. Dementsprechend wird die Koordinatenverstimmung zwischen den Winkellagen durch Addition der Drehzahlen der Eingangswellen 3,5 und durch Multiplikation des so erhaltenen Ergebnisses mit dem Betrag der zeitlichen Koordinatenverschiebung nach folgender Formel

$$\varphi = k_1 \tau (k_2 \omega_3 + k_3 \omega_5) \qquad (1)$$

ermittelt, wobei

$\varphi$ eine Koordinatenverstimmung zwischen den Winkellagen der Wellen 3,5,

$\tau$ eine Zeitperiode für die Speicherung von Taktimpulsen im Zähler 50, die vom Umkippzeitpunkt des Flipflops 49 beim Eintreffen eines Impulses vom Geber 12 an dessen Eingang 37 bis zum Umkippzeitpunkt des Flipflops 49 beim Eintreffen eines Impulses vom Geber 29 an dessen Eingang 38 vergeht,

$\omega_3, \omega_5$ Winkelgeschwindigkeiten der Eingangswellen 3,5,

$k_1, k_2, k_3$ Proportionalitätsfaktoren, die durch eine Anzahl von Erregungselementen 13,30 und durch ein Übersetzungsverhältnis der kinematischen Verbindungen zwischen den Ortslagen der Erregungselemente 13,30 und den Eingangswellen 3 bzw. 5 des Differentialmechanismus 4 bedingt sind, bedeuten.

Im zu behandelnden Regler sind die Erregungselemente 13,30 an den Wellen 3,5 des Differentialmechanismus 4 angebracht. Bei Bedarf können jedoch diese Elemente an beliebigen anderen Stellen angebracht sein, die sich auf den Linien der kinematischen Verbindungen der Wellen 3 und 5 mit dem Elektromotor 2 bzw. mit der Wärmemaschine 6 befinden. Außerdem kann man zur Erhöhung der Meßgenauigkeit an den Wellen 3,5 nicht je ein, sondern je mehrere Erregungselemente anbringen. Die Werte der Faktoren $k_1$, $k_2$, $k_3$ werden durch die Übersetzungsverhältnisse der kinematischen Verbindungen und durch die Anzahl der Erregungselemente, die an den Eingangswellen 3, 5 angebracht sind, bestimmt.

Sind $k_1$, $k_2$, $k_3$ gleich 1, so nimmt die Formel (1) folgende Form an:

$$\varphi = \tau \, (\omega_3 + \omega_5) \qquad (2)$$

Bei den angegebenen Werten der Faktoren $k_1$, $k_2$, $k_3$ enthält der Rechner 45 einen Multiplizierer 51 und einen Summator 52, dessen Ausgang an einen der Eingänge des Multiplizierers 51 angeschlossen ist und dessen andere Eingänge als Eingänge 47, 48 des Rechners 45 dienen.

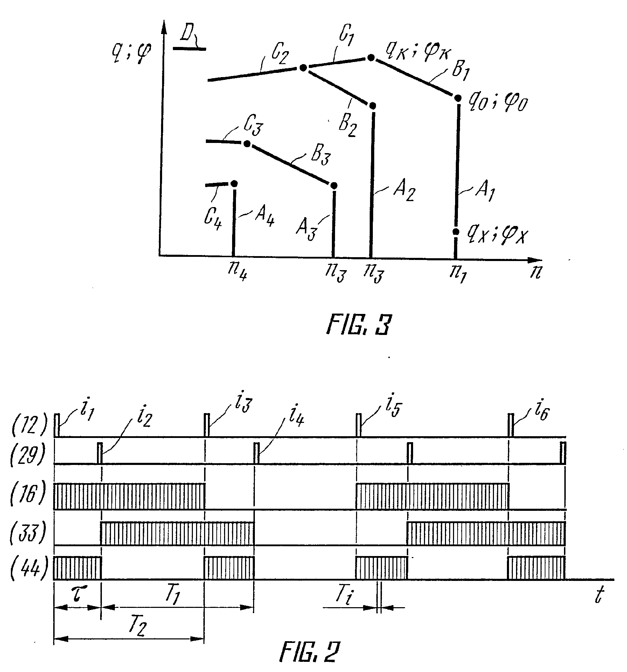

Zum besseren Verständnis der Wirkungsweise des Reglers 1 sind in Fig. 2 Zeitdiagramme von Impulsen an den Ausgängen der Winkellagegeber 12, 29, der Taktimpulszähler 16, 33 und der Einheit 44 zur Bestimmung einer zeitlichen Koordinatenverschiebung $\varphi$ dargestellt, in denen nach der Abszissenachse die Zeit t und nach der Ordinatenachse der Impulspegel aufgetragen sind.

Um besser zu verstehen, wie eine äußere Fördermenge-Drehzahl-Regelkennlinie und Fördermenge-Drehzahl-Teilregelkennlinien formiert werden, sind in Fig. 3 Abhängigkeiten für die Koordinatenverstimmung $\varphi$ zwischen den Winkellagen der Eingangswellen 3, 5 des Differentialmechanismus 4 und für die Fördermenge q, welche nach der Ordinatenachse aufgetragen werden, von der nach der Abszissenachse aufgetragenen Drehzahl n dargestellt, wobei diese Abhängigkeiten der äußeren Drehzahl-Regelkennlinie und den Drehzahl-Teilregelkennlinien q(n) und $\varphi$(n) entsprechen. Diese Kennlinien sind vereinbarungsgemäß in Abschnitte A,B,C,D geteilt, worin bedeuten:

A  Regelabschnitte der Kraftstofförderung, welche eine genaue Aufrechterhaltung der Drehzahl der Wärmemaschine 6 in Grenzen der Betriebsarten der Belastung der letzteren gewährleisten,

B  Abschnitte für die Korrektur der Kraftstofförderung, welche Überlastungszustände der Wärmemaschine 6 gewährleisten,

C  Abschnitte für die Begrenzung der Kraftstofförderung, welche den Schutz der Wärmemaschine 6 vor Überlastungen sichern,

D  Anlaßabschnitt der Kraftstofförderung.

Die Indexziffern (1,2,3,4) der genannten Abschnitte entsprechen vier Stellungen des Fahrfußhebels der Wärmemaschine 6. Zur Vereinfachung der Beschreibung der Wirkungsweise des Reglers 1 sind die Maßstäbe so gewählt, daß die Drehzahl-Regelkennlinien q(n) und $\varphi$ (n) miteinander zusammenfallen.

Der erfindungsgemäße Drehzahlregler 1 (Fig. 1) einer Wärmemaschine funktioniert wie folgt. Die Eingangswelle 3 des Differentialmechanismus 4 wird vom Elektromotor 2 mit vorgegebener Drehzahl angetrieben, während die Eingangswelle 5 durch die Welle 7 der Wärmemaschine 6 in Gegenrichtung angetrieben wird. Bei Gleichheit der Drehzahlen der Eingangswellen 3 und 5 bleiben im Beharrungszustand die Ausgangswelle 8 des Differentialmechanismus 4 und das mit dieser verbundene Kraftstoffdosierorgan 9 unbeweglich. Bei steigender Belastung der Wärmemaschine 6 nimmt die Drehzahl der Welle 5 ab, wodurch sich die Ausgangswelle 8 wegen einer auftretenden Drehzahldifferenz zwischen den Wellen 3 und 5 zu drehen beginnt, wobei die Welle 8 das Kraftstoffdosierorgan 9 im Sinne eines Fördermengenzuwachses verstellt. Das führt zu einer Erhöhung der Drehzahl der Welle 7 der Wärmemaschine 6 und der Eingangswelle 5 auf einen Wert, bei dem die Drehzahlen der Wellen 3, 5 gleich werden und die Ausgangswelle und das Kraftstoffdosierorgan 9 zur Ruhe kommen. Danach wird der Übergangsvorgang der Regelung beendet, und die Wärmemaschine läuft im Beharrungszustand weiter, der der ursprünglich vorgegebenen Drehzahl des Elektromotors 2 entspricht. In ähnlicher Weise wird die Drehzahl der Wärmemaschine 6 bei einer Belastungsabnahme geregelt. In diesem Fall wird das Kraftstoffdosierorgan 9 im Sinne einer Verminderung der Fördermenge verstellt. Bei einer Verminderung der Solldrehzahl des Elektromotors 2 wird die Gleichheit der Drehzahlen der Eingangswellen 3, 5 verletzt, wodurch die Ausgangswelle 8 und das Kraftstoffdosierorgan 9 in einer die Kraftstoffmenge vermindernden Richtung verstellt wird, bis die Drehzahl der mit der Wärmemaschine 6 verbundenen Welle 5 einer neuen Solldrehzahl der durch den Elektromotor 2 angetriebenen Welle 3 gleich wird. Ähnlich wird die Drehzahl der Wärmemaschine 6 bei Erhöhung der Solldrehzahl des Elektromotors 2 geregelt. In diesem Fall wird das Kraftstoffdosierorgan 3 im Sinne einer Zunahme der Fördermenge verstellt.

Da die Wellen 3, 5 des Differentialmechanismus 4 mit dem Elektromotor 2 bzw. der Wärmemaschine 6 kinematisch verbunden sind, besteht zwischen ihren Drehzahlen ein Verhältnis, das dem Übersetzungsverhältnis zwischen den Wellen der Wärmemaschine 6, des Elektromotors 2 und des Differentialmechanismus 4 gleich ist. Im Beharrungszustand ist somit die Drehzahl der Wärmemaschine 6 proportional zur Drehzahl des Elektromotors 2, und die Regelung der Solldrehzahl der Wärmemaschine 6 wird dadurch gewährleistet, daß die Steuerfunktionen vom Elektromotor 2 übernommen werden.

Ein Signal für die Steuerung der Drehzahl des Elektromotors 2 wird im Steuerkanal 10 wie folgt erzeugt. Ein vom Bediener vorgegebenes Steuersignal wird an den zur Eingabe eines Sollwertsignals dienenden Eingang 23 der Einrichtung 22 zur Erstellung des Drehzahlsteuerprogramms des Elektromotors angelegt. Das Drehzahlsteuerprogramm wird in der Einrichtung 22 je nach Informationen erstellt, die zum Eingang 23, zum Steuereingang 40 und zum Informationseingang 41 gelangen. Im allgemeinen stellt der Eingang 23 eine Gesamtheit von Eingängen dar, über die mehrere solche Signale wie die Stellung des Fahrfußhebels (Sollwertsignal), Umgebungstemperatur, Kühlflüssigkeits-, Öl- und Abgasentemperaturen, Aufladedruck, Luftdruck, Parameter der Kraftübertragung, Laufgeschwindigkeit des Maschinenaggregats, Belastungsverstimmung zwischen den parallel arbeitenden Aggregaten und andere Parameter eingeführt werden können. Dem Steuereingang 40 der Einrichtung 22 wird ein Signal für die Lagesteuerung des Kraftstoffdosierorgans 9 der Wärmemaschine 6 zugeleitet, welches sich auf die Koordinatenverstimmung zwischen den Winkellagen der Eingangswellen 3, 5 des Differentialmechanismus 4 bezieht. Zum Informationseingang 41 der Einrichtung 22 gelangt ein Signal, das der Drehzahl der Wärmemaschine 6 proportional ist.

In Abhängigkeit von dem am Eingang 23 eintreffenden Signal wird in der Speichereinheit 43 das eine oder das andere Programm zur Erzeugung einer äußeren Fördermenge-Drehzahl-Regelkennlinie und von Fördermenge-Drehzahl-Teilregelkennlinien ausgewählt, nach welchem die Wärmemaschine 6 arbeiten muß. Das dem ausgewählten Steuerprogramm entsprechende Signal wird vom Ausgang der Speichereinheit 43 auf den Eingang der Vergleichseinheit 42 gegeben, wo sein Wert mit den laufenden Werten der Drehzahl der Wärmemaschine 6 und der Größe der Koordinatenverstimmung zwischen den Winkellagen der Eingangswellen 3, 5 des Differentialmechanismus 4 verglichen. Aufgrund der Vergleichsergebnisse wird ein Signal geliefert, das der geforderten Lage des Kraftstoffdosierorgans 9 zugeordnet ist und vom Ausgang der Vergleichseinheit 42 dem Sollwertsignaleingang 21 der Einrichtung 19 zur Erzeugung eines Steuersignals zugeführt wird, welcher zugleich als Eingang der Vergleichseinheit 20 der Einrichtung 19 dient.

Die Drehzahl der Eingangswelle 3 des Differentialmechanismus 4 wird mit Hilfe des Gebers 12 für die Winkellage der Eingangswelle gemessen, dessen Generator 14 bei der Zusammenwirkung mit dem Erregungselement 13 einen Impuls erzeugt, der am Flipflop 15 eintrifft. Dabei schaltet das Flipflop 15, nachdem es in einen stabilen Arbeitszustand gebracht ist, den Taktimpulszähler 16 ein. Die Speicherung von Impulsen im Zähler 16 erfolgt so lange, bis das Erregungselement 13 mit dem Generator 14 in eine folgende Wechselwirkung tritt, bei der das Flipflop 15 einen neuen stabilen Arbeitszustand annimmt, durch den der Zähler 16 eingeschaltet wird. Der Information über eine Anzahl von innerhalb der Einschaltperiode des Zählers 16 gespeicherten Impulsen wird dem Wandler 17 zur Umwandlung von Taktimpulsen in eine Winkelgeschwindigkeit der ersten Eingangswelle des Differentialmechanismus zugeführt. Von dem zugleich als Ausgang des Drehzahlmessers 11 der ersten Eingangswelle dienenden Ausgang des Wandlers 17 gelangt das Signal zum Eingang 18 der Einrichtung 19, d.h. zu dem zweiten Eingang der Vergleichseinheit 20. Von der Vergleichseinheit 20 trifft das Signal am ersten Eingang des Summators 24 ein, wo es mit einem Signal summiert wird, das dem Korrektureingang 25 der Einrichtung 19 zur Erzeugung eines Steuersignals, d.h. dem zweiten Eingang des Summators 24, vom Ausgang des Kanals 27 für die Drehzahlkorrektur des Elektromotors je nach der Drehzahl der Wärmemaschine zugeführt wird.

Im Kanal 27 wird das Signal wie folgt formiert. Zuerst wird die Drehzahl der Eingangswelle 5 des Differentialmechanismus 4 gemessen. Die Drehzahl der Eingangswelle 5 wird bei der in Fig. 1 gezeigten Ausführungsform des Reglers 1 in gleicher Weise wie die der Eingangswelle 3 gemessen. Der Generator 31 des Winkellagegebers 29 liefert bei der Zusammenwirkung mit dem Erregungselement 30 einen Impuls, mit dem das Flipflop 32 in den ersten stabilen Arbeitszustand gebracht wird. Nach dem nächsten Ansprechen des Gebers 29 wird das Flipflop 32 in den zweiten stabilen Arbeitszustand eingestellt, bei dem der Taktimpulszähler 33 abgeschaltet wird. Die einer Anzahl von im Taktimpulszähler 33 gespeicherten Taktimpulsen entsprechende Periode wird im Wandler 34 in eine Winkelgeschwindigkeit der zweiten Eingangswelle 5 umgewandelt. Von dem zugleich als Ausgang des Drehzahlmessers 28 dienenden Ausgang des Wandlers 34 wird das Signal der Differenziereinheit 35 zugeleitet, in der ein Korrektursignal geliefert wird. Von dem zugleich als Ausgang des Korrekturkanals 27 dienenden Ausgang der Differenziereinheit 35 trifft das differenzierte Signal am Korrektureingang 25 der Einrichtung 19 zur Erzeugung eines Steuersignals, d.h. an dem zweiten Eingang des Summators 24 ein.

Von dem Ausgang des Summators 24 kommt ein Signal am Eingang des Umsetzers 26 an, an dessen Ausgang z.B. Synchronisierimpulse geliefert werden, die auf den Elektromotor 2 gegeben werden.

Die Eigentümlichkeit der Arbeitsweise der Wärmemaschine und des ganzen Maschinenaggregats erfordert die Formierung einer äußeren Fördermenge-Drehzahl-Regelkennlinie und von Fördermenge-Drehzahl-Teilregelkennlinien nach vorgegebenem Gesetz unter Berücksichtigung der Besonderheiten technologischer Operationen, die durch das Maschinenaggregat ausgeführt werden. Um die Kennwerte des technischen Standes des Maschinenaggregates zu verbessern, müssen dabei die genannten Kennlinien mit hoher Genauigkeit erzeugt werden. Dazu ist die Lage des Kraftstoffdosierorgans 9 nach einem zugehörigen Gesetz in Abhängigkeit von der gewählten Drehzahl der Wärmemaschine 6 und von deren Belastung zu steuern.

Zu diesem Zweck ist der Regler 1 mit einem Kanal 36 für die Lagesteuerung des Kraftstoffdosierorgans der Wärmemaschine versehen, wobei vom Ausgang dieses Kanals 36 ein Signal dem Steuereingang 40 der Einrichtung 22 zur Erstellung des Drehzahlsteuerprogramms zugeleitet wird. Im Kanal 36 werden die von den Gebern 12, 29 für die Winkellagen der Eingangswellen abgenommenen Signale den Eingängen 37, 38 der Einrichtung 39 zur Bestimmung einer Koordinatenverstimmung zwischen den Winkellagen der ersten und der zweiten Eingangswelle zugeführt. Das am Ausgang der Einrichtung 39 erscheinende Signal trägt eine Information über die Lage des Kraftstoffdosierorgans 9. Dieses Signal gelangt zum Steuereingang 40 der Einrichtung 22 zur Erstellung des Drehzahlsteuerprogramms, auf deren Informationseingang 41 eine Information über die Drehzahl der Wärmemaschine 6 gegeben wird. Die Koordinatenverstimmung zwischen den Winkellagen der Eingangswellen 3, 5 zu einem bestimmten Zeitpunkt bedingt eine definierte Drehwinkelkoordinate der Ausgangswelle 8 und damit des mit dieser gekoppelten Kraftstoffdosierorgans 9, dessen Lage wiederum von der Belastung der Wärmemaschine 6 abhängt.

Die Messung eines der Koordinatenverstimmung zwischen den Winkellagen der Eingangswellen 3, 5 des Differentialmechanismus 4 zugeordneten Signals erfolgt folgenderweise. Die durch die Winkellagegeber 12, 29 abgegebenen Impulssignale werden über die Eingänge 37, 38 der Einheit 44 zur Bestimmung einer zeitlichen Koordinatenverschiebung, d.h. einem Flipflop 49, zugeführt. Der vom Geber 12 eintreffende Impuls $i_1$ (Fig. 2) stellt das Flipflop 49 (Fig. 1) in den ersten stabilen Arbeitszustand ein, bei dem es geöffnet ist und in den Zähler 50 die Taktimpulse mit einer Periode $T_i$ (Fig. 2) eingetragen werden. In einem solchen geöffneten Zustand befindet sich das Flipflop 49 (Fig. 1) so lange, bis zu ihm vom Geber 29 ein neuer Impuls $i_2$ (Fig. 2) gelangt, durch den das Flipflop 49 (Fig. 1) in den zweiten stabilen Zustand gebracht wird, bei dem es gesperrt wird und keine Taktimpulse mehr dem Zähler 50 zugeführt werden. Beim Ankommen eines nächsten Impulses $i_3$ (Fig. 2) vom Geber 12 am Flipflop 49 wird dieses wieder geöffnet, so daß im Zähler 50 (Fig. 1) eine nächstfolgende Impulsserie gespeichert wird, bis an ihm ein Impuls $i_4$ (Fig. 2) vom Geber 29 eintrifft. Die Anzahl der im Zähler 50 (Fig. 1) gespeicherten Taktimpulsen mit einer Impulsdauer $T_i$ charakterisiert eine gesamte Periode $\tau$ (Fig. 2), die durch die gegenseitige Anordnung der laufenden Koordinaten der Erregungselemente 13 (Fig. 1), 30 bzw. durch die Koordinatenverstimmung zwischen den Winkellagen der umlaufenden Eingangswellen 3, 5 bedingt ist. Vom Zähler 50, d.h. von dem Ausgang der Einheit 44 zur Bestimmung einer zeitlichen Koordinatenverschiebung, wird dem Eingang 46 des Rechners 45 ein der Periode $\tau$ entsprechendes Signal in Digitalform zugeleitet, auf dessen Eingänge 47, 48 Signale von den Drehzahlmessern 11, 28 gegeben werden. Die Verarbeitung der Signale im Rechner 45 wird nach der obenangeführten Formel (2) vorgenommen. Die an den Eingängen 47, 48 eintreffenden Signale werden zuerst im Summator 52 summiert, worauf eine so erhaltene Summe auf den Multiplizierer 51 gegeben und mit einem Signal multipliziert wird, das der zeitlichen Koordinatenverschiebung zwischen den Winkellagen der Eingangswellen 3, 5 entspricht und dem Eingang 46 des Rechners 45, d.h. dem Eingang des Multiplizierers 51 zugeführt ist.

Die Drehzahlen der Eingangswellen 3, 5 werden wie folgt gemessen. Der Impuls $i_1$ (Fig. 2) vom Geber 12 kommt am Eingang des Flipflops 15 (Fig. 1) an, worauf dieses in den ersten stabilen Zustand gebracht wird, bei dem am Eingang des Zählers 16 die Taktimpulse mit der Periode $T_i$ eintreffen. In einem solchen Zustand befindet sich das Flipflop 15 (Fig. 1) so lange, bis daran vom Geber 12 der nächste Impuls $i_3$ (Fig. 2) eintrifft, mit dem das Flipflop (Fig. 1) in den zweiten stabilen Zustand eingestellt wird, bei dem es gesperrt wird und keine Taktimpulse mehr zum Zähler 16 gelangen. Beim Ankommen des nächsten Impulses $i_5$ (Fig. 2) vom Geber 12 wird durch das Flipflop 15 (Fig. 1) der Zähler 16 wieder geöffnet, in dem eine nächstfolgende Serie von Impulsen bis zum Zeitpunkt gespeichert werden, in dem ein Impuls $i_6$ (Fig. 2) vom Geber 12 eintrifft. Die Anzahl der im Zähler 16 (Fig. 1) gespeicherten Taktimpulse mit der Impulsdauer $T_i$ (Fig. 2) kennzeichnet eine gesamte Zeitperiode $T_1$ zwischen zwei aufeinanderfolgenden Impulsen, die vom Geber 12 eingetroffen sind, und wird durch die Winkelgeschwindigkeit des Erregungselementes 13 (Fig. 1), das an der ersten Eingangswelle 3 angebracht ist, und der Eingangswelle 3 selbst bedingt. Vom Ausgang des Zählers 16 wird das Signal in Digitalform auf den Eingang des Wandlers 17 übertragen, wobei am Ausgang des letzteren ein Signal gebildet wird, das $1/T_1$ gleich ist. Dadurch wird am Ausgang des Wandlers 17 und dementsprechend am Ausgang des Drehzahlmessers 11 ein Signal erzeugt, das der Drehzahl der ersten Eingangswelle 3 proportional ist.

Auf ähnliche Weise werden mit Hilfe des Erregungselementes 30, des Generators 31, des Flipflops 32, des Taktimpulszählers 33 und des Wandlers 34 die Periode $T_2$ (Fig. 2) für die zweite Eingangswelle 5 (Fig. 1) und die Drehzahl der Eingangswelle 5 gemessen.

Vom Ausgang des Rechners 45, d.h. von dem Ausgang des Multiplizierers 51, wird das verarbeitete Signal auf den Steuereingang 40 der Einrichtung 22 zur Erstellung des Drehzahlsteuerprogramms gegeben.

Nun soll die Erzeugung einer äußeren Fördermenge-Drehzahl-Regelkennlinie der Wärmemaschine 6 am Beispiel eines Dieselmotors entsprechend der ersten Stellung des Fahrfußhebels (Kurve $A_1$, $B_1$, $C_1$ in Fig. 3) betrachtet werden. Wird der Dieselmotor auf dem Abschnitt $A_1$ unter einer Last im Bereich vom Leerlauf bis zur Vollast betrieben, so wird durch den Drehzahlregler, der eine vorgegebene Drehzahl $n_1$ aufrechterhält, eine Lage des Kraftstoffdosierorgans 9 (Fig.1) in Grenzen von einer dem Leerlauf entsprechenden Fördermenge $q_x$ (Fig. 3) auf die der Vollast entsprechenden Fördermenge $q_o$ verstellt. Da dabei die Koordinatenverstimmung zwischen den Winkellagen der Eingangswellen 3 (Fig. 1), 5 durch die Lage des Kraftstoffdosierorgans 9 bedingt ist, stellt sie sich dementsprechend im Bereich von $\varphi_x$ (Fig. 3) bis $\varphi_o$ ein. Ist die Belastung des Dieselmotors höher als die Nennlast, dann wird die Fördermenge höher als $q_o$ und damit die Koordinatenverstimmung zwischen den Winkellagen der Eingangswellen 3, 5 (Fig. 1) vergrößert. Als Folge davon wird das Signal, welches vom Ausgang des Kanals 36 für die Lagesteuerung des Kraftstoffdosierorgans 9 am Steuereingang 40 der Einrichtung 22 zur Erstellung des Drehzahlsteuerprogramms eingrifft, geändert, wodurch der Dieselmotor auf den Abschnitt $B_1$ übergeht (Fig. 3). Bei einer weiteren Erhöhung der Belastung des Dieselmotors, bei der die Fördermenge ihren Höchstwert erreicht, der für den Motor kritisch (Punkt $q_k$, $\varphi_k$) ist, wird am Ausgang des Kanals 36 (Fig. 1) ein Signal geliefert, das einem Wert entspricht, bei dem der Dieselmotor auf den Abschnitt $C_1$ (Fig. 3) übergeht. Bei der Arbeit des Dieselmotors auf dem Abschnitt $C_1$ ist die Fördermenge begrenzt.

Auf ähnliche Weise werden Fördermenge-Drehzahl-Teilregelkennlinien mit Abschnitten $A_2$, $B_2$, $C_2$ für die zweite

Stellung des Fahrfußhebels und mit Abschnitten $A_3$, $B_3$, $C_3$ für die dritte Stellung des Fahrfußhebels sowie eine Kennlinie minimaler Leerlaufdrehzahlen mit Abschnitten $A_4$, $C_4$ für die vierte Stellung des Fahrfußhebels und eine Anlaßkennlinie mit einem Abschnitt D formiert.

Somit wird durch den erfindungsgemäßen Drehzahlregler einer Wärmemaschine, der eine hohe Zuverlässigkeit, einen geringen Energieverbrauch für den Elektromotor, eine einfache Bauart und hohe dynamische Regelgüteparameter der Drehzahl der Wärmemaschine besitzt, eine hohe Genauigkeit bei der Formierung der äußeren Fördermenge-Drehzahl-Regelkennlinie und der Fördermenge-Drehzahl-Teilregelkennlinien nach vorgegebenem Gesetz in Abhängigkeit von der Belastung gesichert. Dadurch erwirbt dieser Regler universelle Anwendungsmöglichkeiten in praktisch allen Maschinenaggregaten mit Wärmemaschinen. Dies ist besonders wichtig für Dieselmaschinenschleppersätze, wo die Anforderung an die Genauigkeit der Formierung einer äußeren Fördermenge-Drehzahl-Regelkennlinie und von Fördermenge-Drehzahl-Teilregelkennlinien sehr streng sind.

Gewerbliche Anwendbarkeit

Die Erfindung kann im energetischen Maschinenbau zur Drehzahlregelung bei Verbrennungsmotoren, vorzugsweise bei Dieseln für landwirtschaftliche Maschinenschleppersätze, Vollerntemaschinen, Kraftfahrzeuge, dieselelektrische Aggregate, stationäre Anlagen, industrielle Schlepper, Straßenbau - und Transportmaschinen sowie für Maschinensätze mit anderen Wärmemaschinentypen, z.B. mit Turbinen, angewendet werden.

PATENTANSPRÜCHE

1. Drehzahlregler einer Wärmemaschine, der einen Differentialmechanismus (4), dessen erste Eingangswelle (3) mit einem Elektromotor (2) einseitiger Drehrichtung kinematisch gekoppelt ist und dessen zweite Eingangswelle (5) durch die Wärmemaschine (6) angetrieben wird, wobei die Ausgangswelle (8) mit einem Kraftstoffdosierorgan (9) der Wärmemaschine (6) kinematisch verbunden ist, einen Drehzahlsteuerkanal (10) des Elektromotors, bei dem der Drehzahlmesser (11) der Eingangswelle (3) des Differentialmechanismus (4) ausgangsseitig an den Eingang (18) einer Einrichtung (19) zur Erzeugung eines Steuersignals angeschlossen ist, deren Ausgang an den Elektromotor (2) geschaltet ist und deren Sollwerteingang (21) am Ausgang einer Einrichtung (22) zur Erstellung der Drehzahlsteuerprogramme des Elektromotors liegt, die einen Eingang (23) für die Eingabe eines Sollwertsignals aufweist, und einen Kanal (27) für die Drehzahlkorrektur des Elektromotors je nach der Drehzahl der Wärmemaschine enthält, in welchem der Drehzahlmesser (28) der zweiten Eingangswelle (5) des Differentialmechanismus ausgangsseitig an den Eingang einer Differenziereinheit (35) angeschlossen ist, deren Ausgang am Korrektureingang (25) der Einrichtung (19) zur Erzeugung eines Steuersignals für den Drehzahlsteuerkanal (10) des Elektromotors liegt, d a d u r c h  g e k e n n z e i c h n e t , daß er mit einem Kanal (36) für die Lagesteuerung des Kraftstoffdosierorgans (9) der Wärmemaschine versehen ist, der über Geber (12, 29) für die Winkellagen der ersten und der zweiten Eingangswelle des Differentialmechanismus und über eine eingangsseitig an die Ausgänge dieser Geber angeschlossene Einrichtung (39) zur Bestimmung einer Koordinatenabweichung zwischen den Winkellagen der ersten und zweiten Eingangswelle des Differentialmechanismus verfügt, deren Ausgang an den Steuereingang (40) der Einrichtung (22) zur Erstellung des Drehzahlsteuerprogramms des Elektromotors gelegt ist, wobei der Ausgang des Drehzahlmessers (28) der zweiten Eingangswelle des Differentialmechanismus mit dem Informationseingang (41) der Einrichtung (22) zur Erstellung der Drehzahlsteuerprogramms des Elektromotors in Verbindung steht.

2. Drehzahlregler nach Anspruch 1, d a d u r c h g e k e n n z e i c h n e t, daß die Einrichtung (39) zur Bestimmung einer Koordinatenverstimmung¹ zwischen den Winkellagen der ersten und zweiten Eingangswelle des Differentialmechanismus eine Einheit (44) zur Bestimmung einer zeitlichen Koordinatenverschiebung zwischen den Winkellagen der ersten und zweiten Eingangswelle des Differentialmechanismus und einen Rechner (45) enthält, dessen einer Eingang (46) am Ausgang der Einheit (44) zur Bestimmung einer zeitlichen Koordinatenverschiebung zwischen den Winkellagen der ersten und zweiten Eingangswelle des Differentialmechanismus liegt und dessen andere Eingänge (47, 48) mit den Ausgängen der Drehzahlmesser (11, 28) der ersten und der zweiten Eingangswelle des Differentialmechanismus verbunden sind.

3. Drehzahlregler nach Anspruch 2, d a d u r c h g e k e n n z e i c h n e t, daß der Rechner (45) einen Multiplizierer (51) und einen Summator (52) enthält, dessen Ausgang an einen der Eingänge des Multiplizierers (51) angeschlossen ist.

4. Drehzahlregler nach Anspruch 2 oder 3, d a d u r c h g e k e n n z e i c h n e t, daß - bei der Ausführung der Geber (12, 29) für die Winkellagen der ersten und zweiten Eingangswelle des Differentialmechanismus in Form von Impuls-Winkellagegebern - die Einheit (44) zur Bestimmung einer zeitlichen Koordinatenverschiebung zwischen den Winkellagen der ersten und zweiten Eingangswelle des Differentialmechanismus ein Flipflop (49) und einen mit diesem in Reihe geschalteten Taktimpulszähler (50) enthält.

---

¹ abweichung

FIG.1

FIG. 3

FIG. 2

# INTERNATIONAL SEARCH REPORT

International Application No PCT/SU.87/00107

## I. CLASSIFICATION OF SUBJECT MATTER (if several classification symbols apply, indicate all) 6

According to International Patent Classification (IPC) or to both National Classification and IPC

$IPC^4$ — G 05 D 13/62, F 02 D 41/14

## II. FIELDS SEARCHED

| Minimum Documentation Searched 7 | |
|---|---|
| Classification System | Classification Symbols |
| $IPC^4$ | G 05 D 13/62, 13/64, F 02 D 1/08, 31/00, 41/14 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | SU,A1,708065,(Tsentralny nauchno-issledovatelsky i konstruktorsky institut toplivnoi apparatury i statsionarrykh dvigatelei),05 January 1980 (05.01.80),see figure 1 | 1 |
| A | GB,A,1544246,(SOCIETE D'APPLICATIONS DES MACHINES MOTRICES),19 April 1979(19.04.79),see figures 1,2, page 1,lines 84-90,page 2,lines 1-10 | 1 |
| A | US,A,2987054,(Television Associates,Inc),06 June 1961 (06.06.61),see figures 2,7,column 2,lines 18-30, column 3,lines 25-75,column 4,lines 1-2 | 1 |
| A | US,A,4572131(Kabushiki Kaisha Komatsu)25 February 1986,1,4 (25.02.86),see figures 4,5,7,column 2,lines 59-64,column 3,lines 7-59 | 1,4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 25 March 1987(25.03.87) | 25 May 1988(25.05.88) |
| International Searching Authority | Signature of Authorized Officer |
| ISA/SU | |

Form PCT/ISA/210 (second sheet) (January 1985)